# EUROPÄISCHE PATENTSCHRIFT

(11) **EP 3 676 078 B1**
(45) Veröffentlichungstag und Bekanntmachung des Hinweises auf die Patenterteilung: **08.07.2026**
(21) Anmeldenummer: 18752748.6
(22) Anmeldetag: 08.08.2018
(51) Int. Cl.: B29C 65/08, B29C 65/00, B29C 65/02

(54) **KUNSTSTOFFBAUTEIL MIT DARAN VERANKERTEM ANBAUTEIL**
PLASTIC COMPONENT COMPRISING AN ADD-ON PART ANCHORED THERETO
ÉLÉMENT EN MATÉRIAU SYNTHÉTIQUE PRÉSENTANT UNE PIÈCE QUI Y EST ANCRÉE

(30) Priorität: 31.08.2017 DE 102017008170
(43) Veröffentlichungstag der Anmeldung: 08.07.2020
(73) Patentinhaber: Webasto SE, 82131 Stockdorf (DE); Multimaterial-Welding AG, 2503 Biel/Bienne (CH)
(72) Erfinder: BAUMANN, Matthias, 82131 Stockdorf (DE)
(74) Vertreter: Kilian Kilian & Partner mbB
(86) Internationale Anmeldenummer: PCT/EP2018/071540
(87) Internationale Veröffentlichungsnummer: WO 2019/042729

(56) Entgegenhaltungen:
- EP-A1- 2 246 178
- WO-A1-2011/003891
- WO-A1-2014/075200
- WO-A1-2015/181300
- JP-A- H01 146 725

## Beschreibung

Die Erfindung betrifft ein Kunststoffbauteil mit einem eine duromere Matrix aufweisenden Kern und einem daran verankerten Anbauteil, das zumindest in seinem Verankerungsbereich aus einem thermoplastischen Kunststoff gebildet ist und am Kern des Kunststoffbauteils mit seinem Verankerungsbereich festgelegt ist.

Es ist bekannt, in einem Kunststoffbauteil, das einen eine duromere Matrix aufweisenden Kern enthält, einen aus einem thermoplastischen Kunststoffmaterial bestehenden Ankerstift in den Kern des Kunststoffbauteils einzubringen und darin mit Hilfe von mechanischer Anregung, z. B. mittels einer Sonotrode erzeugter Ultraschallschwingungen, zu erweichen, so dass ein Anteil des Kunststoffmaterials des Ankerstifts in den Kern fließt und nach dem Verfestigen darin den Ankerstift fest verankert hält. Mit einem solchen Ankerstift kann ein Anbauteil an dem Kunststoffbauteil befestigt werden.

Aus der WO 2014/075200 A1 ist eine solche Befestigung eines Anbauteils mittels eines thermoplastischen Ankerstifts bekannt geworden, der in eine Ausnehmung in dem Kunststoffbauteil eingesetzt und darin mit Hilfe einer Sonotrode erweicht worden ist und nach seinem Verfestigen das Anbauteil am Kunststoffbauteil fest hält.

Weiterhin ist es bekannt, thermoplastische Dübel in eine duromere Matrix eines Kunststoffbauteils einzudrücken, so dass anschließend Schrauben in die Dübel einschraubbar sind und Anbauteile fixieren können. Die duromere Matrix besteht dabei vorzugsweise aus einem porösen Grundwerkstoff oder alternativ aus einer im Kern offenen Sandwichstruktur.

Zur Befestigung von Anbauteilen sind somit zusätzliche Verbindungs- oder Ankerbauteile wie Ankerstifte oder auch thermoplastische Dübel erforderlich.

Aus der WO 2015/181300 A1 ist ein eingangs genanntes Kunststoffbauteil mit einem eine duromere Matrix aufweisenden Kern und einem daran verankerten Anbauteil bekannt geworden. Das Anbauteil ist zumindest in seinem Verankerungsbereich aus einem thermoplastischen Kunststoff gebildet. Der Verankerungsbereich weist einen Einsetzabschnitt auf, der in eine im Kern gebildete Öffnung mittels Presspassung eingesetzt ist. Der Einsetzabschnitt des Anbauteils verbindet sich in einem mittels Ultraschallschwingungen erzeugten fließfähigen Zustand mit der duromeren Matrix des Kerns und ist darin in erstarrtem Zustand als Verbindungsanker verankert.

Aus der JP H01 146725 A ist ein Kunststoffbauteil bekannt geworden, das ein plattenförmiges Bauteil aus thermoplastischem Kunststoff und eine aus einem duroplastischen Kunststoff geschäumte Schicht aufweist, die mit dem plattenförmigen Bauteil flächig verbunden ist. Die Verbindung erfolgt mittels einer Vielzahl von zylindrischen Vorsprüngen, die vom plattenförmigen Bauteil vorragen und auch aus thermoplastischem Kunststoff gebildet sind. Das plattenförmige Bauteil und die geschäumte Schicht werden bei der Herstellung ihrer Verbindung derart gegeneinander gepresst, dass die Vorsprünge in den duroplastischen Kunststoff der geschäumten Schicht eindringen. Dabei werden die Vorsprünge durch Energiezufuhr, z. B. durch Ultraschallschwingungen, erwärmt und derart verformt, dass sie in erstarrtem Zustand eine feste Verankerung in der geschäumten Schicht bilden.

Aus der EP 2 246 178 A1 ist ein Kunststoffbauteil bekannt geworden, an dem ein Kunststoffanbauteil mittels Ultraschallschweißen angebracht ist.

Weiterhin ist aus der WO 2011/003891 A1 ein Kunststoffbauteil bekannt geworden, an dem ein Kunststoffanbauteil mittels torsionalem Ultraschallschweißen angebracht ist. Das Kunststoffanbauteil weist beim Schweißvorgang schmelzende Kopplungselemente auf, die als Auskragungen gebildet sind und so angeordnet sind, dass ihre Schmelze auf einer Schweißfläche des Kunststoffbauteils verbleibt.

Ferner ist aus WO2016/198547A1 ein Kunststoffbauteil 1 ("first object") bekannt geworden, in dessen Kern 13 ("interlining layer") ein Verankerungsteil 3 ("connector") eingepresst wird.

Der Erfindung liegt daher die Aufgabe zugrunde, ein eingangs genanntes Kunststoffbauteil zu schaffen, an dem ein Anbauteil mit geringem Aufwand festlegbar ist.

Diese Aufgabe wird erfindungsgemäß durch ein Kunststoffbauteil mit den Merkmalen des Anspruchs 1 gelöst.

Vorteilhafte Ausgestaltungen der Erfindung sind in den abhängigen Ansprüchen angegeben.

Dadurch, dass das Anbauteil selbst oder zumindest ein Verankerungsbereich als Teil oder Abschnitt des Anbauteils die Verankerung oder den Verbindungsanker breit stellt, sind keine weiteren Verankerungsteile erforderlich. Da der Verankerungsbereich oder zumindest ein Abschnitt davon durch Energiezufuhr plastifiziert und in einen fließfähigen oder teilfließfähigen Zustand überführt wird, kann der Verankerungsbereich in das Kernmaterial oder in die duromere Matrix des Kerns eindringen und sich mit diesem innig verbinden. Nach dem Erstarren und Verfestigen des thermoplastischen Kunststoffmaterials des Verankerungsbereichs bildet dieser eine feste Verankerung in dem Kunststoffbauteil. Die Energiezufuhr erfolgt bevorzugt mittels Ultraschallschwingungen unter Verwendung einer Sonotrode.

Der Verankerungsbereich des Anbauteils enthält zumindest eine Vertiefung, die in den Kern eingesetzt oder eingepresst ist. Die Vertiefung ist insbesondere derart gebildet, dass sie vom Anbauteil oder von einer äußeren Deckplatte des Anbauteils einwärts gegen das Kunststoffbauteil vorragt. Die Vertiefung ist z. B. als ringförmiger oder topfförmiger Abschnitt des Verankerungsbereichs bzw. des Anbauteils gebildet. Die Vertiefung ist demnach ein vom Anbauteil vorragender Abschnitt oder Vorsprung, der in die Tiefe des Kerns eingesetzt ist.

Das Anbauteil enthält zumindest ein Funktions- oder Anbindungsbauteil, beispielsweise einen Gleiter, eine Führung oder eine Öffnung oder eine Bohrung z. B. an einem Steg des Anbauteils, aufweisen, das aus dem thermoplastischen Kunststoff des Anbauteils geformt ist. Damit kann der Herstellungsaufwand wesentlich verringert werden.

Gemäß einer bevorzugten Ausführungsform ist vorgesehen, dass das Anbauteil zumindest in seinem Verankerungsbereich oder in seiner Gesamtheit ausschließlich aus einem thermoplastischen Kunststoff gebildet ist. Bei einer solchen materialeinheitlichen Gestaltung ist das Anbauteil insbesondere als Kunststoff-Spritzgussteil kostengünstig herstellbar und einfach zu plastifizieren.

Zweckmäßigerweise ist der Kern aus einem porösen Grundwerkstoff oder aus einer im Kern offenen Sandwichstruktur, insbesondere einem PU-Composite-Bauteil (z. B. Sandwichstruktur aus Polyurethan, Glasfaser und Papierwabe) gebildet.

Der Kern kann eine Deckschicht aufweisen, an der das Anbauteil anliegt und durch die der Verankerungsbereich bzw. die Vertiefung des Anbauteils eingepresst ist. Die Deckschicht ist z. B. aus mit Glasfasern verstärktem PU gebildet. Der Kern kann auch an seiner gegenüberliegenden Seite von einer Deckschicht abgedeckt sein.

Der Verankerungsbereich kann noch weitere Verankerungsabschnitte aufweisen, die in den Kern eingesetzt oder eingepresst werden und gleichfalls eine Verankerung bilden. Ein solcher Verankerungsabschnitt ist z. B. als Stift oder als Platte oder auch ringförmig gebildet und kann außerhalb neben der Vertiefung und z. B. ringförmig oder ringabschnittsförmig um die Vertiefung herum angeordnet sein.

Zweckmäßigerweise ist der Verankerungsbereich oder die Vertiefung zum Aufnehmen einer Sonotrode geformt, die im Eingriff in dieser Vertiefung mittels Ultraschallschwingungen Energie unmittelbar auf das thermoplastische Kunststoffmaterial des Verankerungsbereichs des Anbauteils überträgt.

Nachfolgend wird die Erfindung anhand eines Ausführungsbeispiels eines erfindungsgemäßen Kunststoffbauteils unter Bezugnahme auf die Zeichnung näher erläutert. Es zeigt:
- Fig. 1: in einer Schnittansicht in Explosionsdarstellung ein PU-Composite-Bauteil mit einem Anbauteil und einer Sonotrode vor dem Befestigen des Anbauteils; und
- Fig. 2: in einer Schnittansicht das PU-Composite-Bauteil mit daran festgelegtem Anbauteil.

Ein Kunststoffbauteil 1 ist z. B. als PU-Composite-Bauteil gebildet und weist einen Kern 15 mit einer duromeren Matrix auf, der beispielsweise als offene Sandwichstruktur, z. B. einer Papierwabenstruktur, oder aus einem porösen Grundwerkstoff wie z. B. Polyurethan-Hartschaum gebildet ist und jeweils von einer Deckschicht (nicht dargestellt) z. B. aus mit Glasfasern verstärktem PU abgedeckt sein kann.

Ein Anbauteil 2 ist zum Festlegen an dem Kern 15 des Kunststoffbauteils 1 vorgesehen. Über das Anbauteil 2 kann eine Verbindung zu anderen Teilen hergestellt werden und es können Kräfte auf das Kunststoffbauteil 1 übertragen werden. Das Anbauteil 2 kann Funktions- oder Anbauteile wie z. B. einen Gleiter 11 enthalten, der an einer Führung 12 zu lagern ist, die das z. B. einen Schiebehimmel bildende Kunststoffbauteil 1 über den Gleiter 11 verschiebbar lagert. Das Anbauteil 2 kann auch mit einem Steg 13 gebildet sein, der ein Durchgangsloch 14 oder dergleichen zur Verbindung mit einem anderen Bauteil enthält.

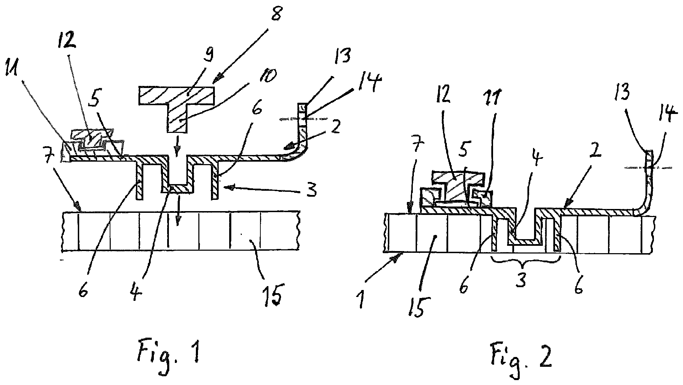

Das Anbauteil 2 ist zumindest in einem Verankerungsbereich 3 und bevorzugt in seiner Gesamtheit aus thermoplastischem Kunststoffmaterial hergestellt. Der Verankerungsbereich 3 des in Fig. 1 dargestellten Anbauteils 2 weist eine beispielsweise zylindrisch geformte Vertiefung 4 auf, die von einem als Deckplatte 5 geformten Abschnitt vorragt, sowie Verankerungsabschnitte 6, die neben der Vertiefung 4 von der Deckplatte 5 vorragen. Die Verankerungsabschnitte 6 sind stift- oder plattenförmige Elemente oder als ein die Vertiefung 4 ringförmig umgebendes Element gebildet.

Das Anbauteil 2 wird am Kunststoffbauteil 1 befestigt, indem es gegen die Seitenfläche 7 des Kunststoffbauteils 1 geführt und - durch eine fakultativ vorhandene Deckschicht - in den Kern 15 des Kunststoffbauteils 1 eingepresst wird, bis es seine vorgesehene Position erreicht hat, in der die Deckplatte 5 an der Seitenfläche 7 des Kunststoffbauteils 1 bzw. des Kerns 15 anliegt. Beim Einpressen des Verankerungsbereichs 3 mit der Vertiefung 4 und den Verankerungsabschnitten 6 in den Kern 15 wird das nachgebende Kernmaterial dementsprechend verdrängt.

Eine Sonotrode 8 wird an das Anbauteil 2 herangeführt und mit ihm in Kontakt gebracht. Die Sonotrode 8 enthält beispielsweise einen von einer Basis 9 aus vorstehenden zylindrischen Zapfen 10, der in seiner Form und Größe an die Vertiefung 4 des Verankerungsbereichs 3 des Anbauteils 2 angepasst ist und der in seiner Arbeitsstellung in der Vertiefung 4 durch Ultraschallschwingungen das thermoplastische Kunststoffmaterial erweicht und soweit plastifiziert, dass das fließfähige Kunststoffmaterial der Vertiefung 4 eine innige Verbindung mit dem umgebenden Kernmaterial des Kerns 15 des Kunststoffbauteils 1 sowie der gegebenenfalls vorhandenen Deckschicht eingehen kann. Bei ausreichend hoher Leistung der Sonotrode 8 können die Ultraschallschwingungen auch die Verankerungsabschnitte 6 plastifizieren, so dass auch sie in einem fließfähigen Zustand eine innige Verbindung mit dem Kernmaterial des Kerns 15 des Kunststoffbauteils 1 bzw. der Deckschicht eingehen können. Die duromere Matrix des Kernmaterials, die im Bereich des eingepressten Anbauteils verformt oder verdrängt wird und durch das plastische Kunststoffmaterial wieder verfestigt wird, wird ansonsten durch die Energiezufuhr nicht beeinträchtigt.

Nachdem die Sonotrode 8 die Erzeugung der Ultraschallschwingungen beendet hat, verfestigt sich das Kunststoffmaterial des Verankerungsbereichs 3 des Anbauteils 2 und der Verankerungsbereich 3 bildet einen stabilen und dauerhaften Verbindungsanker, der das Anbauteil 2 an dem Kern 15 und der ggfs. vorhandenen Deckschicht des Kunststoffbauteils 1 fixiert hält. Die Sonotrode 8 wird beim Verfestigen des Kunststoffmaterials oder danach entfernt.

Fig. 2 zeigt das Kunststoffbauteil 1 mit dem daran verankerten Anbauteil 2. Die Gestaltung des Verankerungsbereichs 3, der Vertiefung 4 und der Verankerungsabschnitte 6 sind beispielhaft dargestellt. Auch andere Gestaltungen des Verankerungsbereichs 3 mit in das offene oder offenporige Kernmaterial eindringenden oder daran aufliegenden Teilen oder Verbindungsanker können verwendet werden, soweit sie eine innige Verbindung oder Verankerung ermöglichen.

Bei diesem Kunststoffbauteil 1 benötigt somit die Verankerung des Anbauteils 2 keine zusätzlichen Bauteile wie Schrauben, Nieten oder Dübel oder dergleichen.

Da sich der Verankerungsbereich 3 bei eingebautem Anbauteil 2 unterhalb der Deckplatte 5 im Kernmaterial befindet und im Wesentlichen von der Deckplatte 5 abgedeckt ist, ergibt sich ein bevorzugtes optisches Erscheinungsbild ohne zusätzliche Schrauben oder Nieten.

Das Einpressen des Anbauteils 2 in das Kernmaterial des Kerns 15 des Kunststoffbauteils 1, gegebenenfalls durch eine Deckschicht hindurch, kann von einer eigenen Pressvorrichtung oder auch mittels der Sonotrode 8 erfolgen.

Gemäß einer weiteren Ausgestaltung kann in dem Kernmaterial des Kunststoffbauteils 1 zumindest eine Ausnehmung gebildet werden, die im Wesentlichen der Form des Verankerungsbereichs 3 angepasst ist oder mit dieser übereinstimmt, so dass beim Einpressen des Anbauteils 2 weniger Kernmaterial verformt werden muss. Diese Vorbereitung des Kunststoffbauteils 1 ist insbesondere bei Verwendung eines weniger verformbaren Kernmaterials zweckmäßig.

Das Anbauteil 2 kann gänzlich aus einem thermoplastischen Kunststoffmaterial gebildet sein oder zumindest in seinem Verankerungsbereich 3.

Das Anbauteil 2 kann abweichend von der in den Fig. 1 und 2 dargestellten Ausführungsform auch zumindest in seinem Verankerungsbereich 3 auch eben geformt sein, so dass es in ebenflächiger Anlage auf dem gleichfalls zumindest im Anlagebereich ebenflächigen Kern 15 des Kunststoffbauteils 1 befestigt und verankert ist. Verankerung bedeutet daher nicht nur ein verdrängendes und verformendes Eindringen in das Kernmaterial, sondern auch eine flächige Verbindung. Eine hierbei verwendete Sonotrode hat eine dementsprechend angepasste Form.

Wenn auch der Einsatz einer Sonotrode 8 zum Erzeugen der Energie, die zum Plastifizieren des thermoplastischen Kunststoffmaterials des Verankerungsbereichs 3 des Anbauteils 2 benötigt wird, besonders bevorzugt ist, so kann dennoch auch ergänzend oder alternativ die Energiezufuhr z. B. durch eine Heizeinrichtung wie eine Infrarotheizung erfolgen.

Die in der Beschreibung und anhand des Ausführungsbeispiels sowie in den Figuren offenbarten einzelnen Merkmale der Erfindung können in beliebigen technisch zweckmäßigen Anordnungen und Gestaltungen mit dem Erfindungsgegenstand in seiner allgemeinen Form kombiniert werden.

### Bezugszeichenliste

| | | | |
|---|---|---|---|
| 1 | Kunststoffbauteil | 9 | Basis |
| 2 | Anbauteil | 10 | Zapfen |
| 3 | Verankerungsbereich | 11 | Gleiter |
| 4 | Vertiefung | 12 | Führung |
| 5 | Deckplatte | 13 | Steg |
| 6 | Verankerungsabschnitt | 14 | Durchgangsloch |
| 7 | Seitenfläche | 15 | Kern |
| 8 | Sonotrode | | |

## Patentansprüche

1. Kunststoffbauteil (1) mit einem eine duromere Matrix aufweisenden Kern (15) und einem daran verankerten Anbauteil (2), das zumindest in seinem Verankerungsbereich (3) aus einem thermoplastischen Kunststoff gebildet ist und am Kern (15) des Kunststoffbauteils (1) mit seinem Verankerungsbereich (3) festgelegt ist,
wobei der Verankerungsbereich (3) zumindest eine Vertiefung (4) aufweist, die in den Kern (15) eingepresst ist, sich in einem mittels Energiezufuhr und insbesondere mittels Ultraschallschwingungen erzeugten fließfähigen Zustand mit der duromeren Matrix des Kerns (15) verbindet und darin in erstarrtem Zustand insbesondere als Verbindungsanker verankert ist, und wobei das Anbauteil (2) zumindest ein Funktions- oder Anbindungsbauteil (11, 13) aufweist, das aus dem thermoplastischen Kunststoff geformt ist.

2. Kunststoffbauteil (1) nach Anspruch 1,
**dadurch gekennzeichnet, dass** das Anbauteil (2) zumindest in seinem Verankerungsbereich (3) oder in seiner Gesamtheit ausschließlich aus einem thermoplastischen Kunststoff gebildet ist.

3. Kunststoffbauteil (1) nach Anspruch 1 oder 2,
**dadurch gekennzeichnet, dass** der Kern (15) aus einem porösen Grundwerkstoff oder aus einer im Kern (15) offenen Sandwichstruktur, insbesondere einem PU-Composite-Bauteil, besteht.

4. Kunststoffbauteil (1) nach einem der Ansprüche 1 bis 3,
**dadurch gekennzeichnet, dass** der Verankerungsbereich (3) des Anbauteils (2) zumindest einen Verankerungsabschnitt (6) aufweist, der insbesondere als Stift, Platte oder Ring gebildet ist und in den Kern (15) eingepresst ist.

5. Kunststoffbauteil (1) nach einem der Ansprüche 1 bis 4,
**dadurch gekennzeichnet, dass** der Verankerungsbereich (3) oder die Vertiefung (4) zum Aufnehmen einer Sonotrode (8) geformt ist.

6. Kunststoffbauteil (1) nach einem der Ansprüche 1 bis 5,
**dadurch gekennzeichnet, dass** der Kern (15) eine Deckschicht aufweist, an der das Anbauteil (2) anliegt und durch die der Verankerungsbereich (3) bzw. die Vertiefung (4) des Anbauteils (2) eingepresst ist.

## Claims

1. Plastics component (1) with a core (15) having a thermoset matrix and an add-on part (2) which is anchored thereon and, at least in its anchoring region (3), is formed from a thermoplastic material and the anchoring region (3) of the add-on part is fixed on the core (15) of the plastics component (1),
wherein the anchoring region (3) has at least one depression (4) which is pressed into the core (15), is bonded to the thermoset matrix of the core (15) in a fluid state created by means of an input of energy and in particular by means of ultrasound vibrations, and is anchored therein in the solidified state, in particular as a connection anchor, and wherein the add-on part (2) has at least one functional or attachment component (11, 13), which is formed from the thermoplastic material.

2. Plastics component (1) according to Claim 1, **characterized in that** the add-on part (2), at least in its anchoring region (3) or in its entirety, is formed exclusively from a thermoplastic material.

3. Plastics component (1) according to Claim 1 or 2, **characterized in that** the core (15) consists of a porous base material or a sandwich structure with an open core (15), in particular a PU composite component.

4. Plastics component (1) according to one of Claims 1 to 3,
**characterized in that** the anchoring region (3) of the add-on part (2) has at least one anchoring portion (6) which is formed in particular as a pin, plate or ring and is pressed into the core (15).

5. Plastics component (1) according to one of Claims 1 to 4,
**characterized in that** the anchoring region (3) or the depression (4) is formed to receive a sonotrode (8).

6. Plastics component (1) according to one of Claims 1 to 5,
**characterized in that** the core (15) has a cover layer, against which the add-on part (2) bears and through which the anchoring region (3) or the depression (4) of the add-on part (2) is pressed in.

## Revendications

1. Composant en matière plastique (1) comprenant un noyau (15) présentant une matrice duromère et une partie rapportée (2) ancrée à celui-ci, qui est constituée, au moins dans sa zone d'ancrage (3), d'une matière plastique thermoplastique et qui est fixée, par sa zone d'ancrage (3), au noyau (15) du composant en matière plastique (1), la zone d'ancrage (3) présentant au moins un évidement (4) qui est enfoncé dans le noyau (15), se lie, dans un état apte à l'écoulement obtenu par apport d'énergie et notamment par des vibrations ultrasonores, à la matrice duromère du noyau (15), et y est ancré à l'état solidifié, notamment en tant qu'ancre de liaison, et la partie rapportée (2) présentant au moins un composant fonctionnel ou d'attache (11, 13) qui est formé à partir de la matière plastique thermoplastique.

2. Composant en matière plastique (1) selon la revendication 1,
**caractérisé en ce que** la partie rapportée (2) est formée, au moins dans sa zone d'ancrage (3) ou dans son intégralité, exclusivement d'une matière plastique thermoplastique.

3. Composant en matière plastique (1) selon la revendication 1 ou 2,
**caractérisé en ce que** le noyau (15) est constitué d'un matériau de base poreux ou d'une structure sandwich ouverte dans le noyau (15), en particulier d'un composant composite en PU.

4. Composant en matière plastique (1) selon l'une quelconque des revendications 1 à 3,
**caractérisé en ce que** la zone d'ancrage (3) de la partie rapportée (2) présente au moins une section d'ancrage (6), qui est formée notamment sous forme de tige, de plaque ou d'anneau et qui est enfoncée dans le noyau (15).

5. Composant en matière plastique (1) selon l'une quelconque des revendications 1 à 4,
**caractérisé en ce que** la zone d'ancrage (3) ou l'évidement (4) est formé pour recevoir une sonotrode (8).

6. Composant en matière plastique (1) selon l'une quelconque des revendications 1 à 5,
**caractérisé en ce que** le noyau (15) présente une couche de recouvrement contre laquelle la partie rapportée (2) est en appui et à travers laquelle la zone d'ancrage (3) ou l'évidement (4) de la partie rapportée (2) est enfoncé.
